(19) Europäisches Patentamt / European Patent Office / Office européen des brevets

(11) **EP 4 130 837 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
**G02B 13/04** (1968.09)

(21) Application number: **21775478.7**

(52) Cooperative Patent Classification (CPC):
**G02B 13/04; G02B 13/18**

(22) Date of filing: **04.03.2021**

(86) International application number:
**PCT/JP2021/008473**

(87) International publication number:
**WO 2021/192894 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2020 JP 2020053082**

(71) Applicant: **Kyocera Corporation
Kyoto-shi
Kyoto 612-8501 (JP)**

(72) Inventor: **YAMAZAKI Atsushi
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **IMAGING OPTICAL SYSTEM, IMAGING DEVICE, AND VEHICLE**

(57)     Provided is an image-capturing optical system including a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power. A surface of at least one of the lens that are included in the first lens group and that have the negative refractive power, the surface being located on the object side, is a convex surface in a paraxial region and has an aspherical surface having a shape with which convex power decreases with increasing distance from an optical axis. A surface of the second lens group on the most image side has a convex shape toward the image side in a paraxial region. The image-capturing optical system satisfies the following conditional expressions (1) to (3):

$$-1.30 < fn/f < -0.6 \ldots (1)$$

$$Di/\tan\omega/100 < -0.4 \ldots (2)$$

$$2\omega \leq 120° \ldots (3)$$

where f is a focal length of an entire lens system, fn is a focal length of a negative lens of the first lens group, Di is a distortion at a maximum angle of view (unit: %), and ω: an incident angle of a maximum angle of view light beam on the object side.

FIG. 1

**Description**

Cross-Reference To Related Application

The present application claims the priority of Japanese Patent Application No. 2020-053082 filed on March 24, 2020, the disclosure of which is hereby incorporated by reference in its entirety.

Technical Field

The present disclosure relates to an image-capturing optical system, an image-capturing device, and a vehicle.

Background Art

There is a need for surveillance cameras and vehicle-mounted cameras to have both a wide image-capturing area and a high resolving power. Although increasing the number of pixels of an image-capturing device contributes to improvement of resolving power, it also increases the cost of the image-capturing device. Accordingly, there is a concept of setting a central region of an image to have a higher definition than the peripheral region of the image by emulating human visual function as an efficient structure in terms of the amount of information in an image. As an image-capturing lens that achieves this concept, PTL 1 discloses an image-capturing optical system capable of obtaining, in a central region of a screen, an enlarged image having a high definition that is equivalent to that of an image obtained by a telephoto lens while ensuring a wide angle of view by generating a large negative distortion.
However, in PTL 1, the back focus is very short, and it is difficult to ensure a high resolving power without high-precision adjustment.

Citation List

Patent Literature

PTL 1: Japanese Unexamined Patent Application Publication No. 2005-010521

Summary of Invention

An image-capturing lens according to an embodiment of the present disclosure includes a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power. A surface of at least one of the lens that are included in the first lens group and that have the negative refractive power, the surface being located on the object side, is a convex surface in a paraxial region and has an aspherical surface having a shape with which convex power decreases with increasing distance from an optical axis. A surface of the second lens group on the most image side has a convex shape toward the image side in a paraxial region. The image-capturing lens satisfies the following conditional expressions (1) to (3).

$$-1.30 < fn/f < -0.6 \ \dots \ (1)$$

$$Di/\tan\omega/100 < -0.4 \ \dots \ (2)$$

$$2\omega \leq 120° \ \dots \ (3)$$

where f is a focal length of an entire lens system, fn is a focal length of a negative lens of the first lens group, Di is a distortion at a maximum angle of view (unit: %), and $\omega$: an incident angle of a maximum angle of view light beam on the object side.
An image-capturing device according to an embodiment of the present disclosure includes an image-capturing optical system that includes a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power, in which a surface of at least one of the lens that are included in the first lens group and that have the negative refractive power, the surface being located on the object side, is a convex surface in a paraxial region and has an aspherical surface having a shape with which convex power decreases with increasing distance from an optical axis and in which a surface of the second lens group on the most image side has a convex shape toward the image side in a paraxial region, the image-capturing optical system satisfying conditional expressions (1) to (3) described below, and an image-capturing device that converts an optical image, which is formed through the image-capturing optical system, into an electrical signal.

$$-1.30 < fn/f < -0.6 \ ... \ (1)$$

$$Di/\tan\omega/100 < -0.4 \ ... \ (2)$$

$$2\omega \leq 120° \ ... \ (3)$$

where:

f: a focal length of an entire lens system
fn: a focal length of a negative lens of the first lens group
Di: a distortion at a maximum angle of view (unit: %)
ω: an incident angle of a maximum angle of view light beam on the object side

A vehicle according to an embodiment of the present disclosure is equipped with an image-capturing device including an image-capturing optical system that includes a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power, in which a surface of at least one of the lens that are included in the first lens group and that have the negative refractive power, the surface being located on the object side, is a convex surface in a paraxial region and has an aspherical surface having a shape with which convex power decreases with increasing distance from an optical axis and in which a surface of the second lens group on the most image side has a convex shape toward the image side in a paraxial region, the image-capturing optical system satisfying conditional expressions (1) to (3) described below, and an image-capturing device that converts an optical image, which is formed through the image-capturing optical system, into an electrical signal.

$$-1.30 < fn/f < -0.6 \ ... \ (1)$$

$$Di/\tan\omega/100 < -0.4 \ ... \ (2)$$

$$2\omega \leq 120° \ ... \ (3)$$

where:

f: a focal length of an entire lens system
fn: a focal length of a negative lens of the first lens group

Di: a distortion at a maximum angle of view (unit: %)

ω: an incident angle of a maximum angle of view light beam on the object side

Brief Description of Drawings

[Fig. 1] Fig. 1 is a diagram illustrating a configuration of an image-capturing optical system according to an embodiment (corresponding to Example 1).

[Fig. 2] Fig. 2 is an aberration diagram illustrating various aberrations of the image-capturing optical system of Example 1.

[Fig. 3] Fig. 3 is a diagram illustrating a configuration of an image-capturing optical system of Example 2.

[Fig. 4] Fig. 4 is an aberration diagram illustrating various aberrations of the image-capturing optical system of Example 2.

[Fig. 5] Fig. 5 is a diagram illustrating a configuration of an image-capturing optical system of Example 3.

[Fig. 6] Fig. 6 is an aberration diagram illustrating various aberrations of the image-capturing optical system of Example 3.

[Fig. 7] Fig. 7 is a diagram illustrating a configuration of an image-capturing optical system of Example 4.

[Fig. 8] Fig. 8 is an aberration diagram illustrating various aberrations of the image-capturing optical system of Example 4.

[Fig. 9] Fig. 9 is a diagram illustrating a configuration of an image-capturing optical system of Example 5.

[Fig. 10] Fig. 10 is an aberration diagram illustrating various aberrations of the image-capturing optical system of Example 5.

[Fig. 11] Fig. 11 is a diagram illustrating a configuration of an image-capturing optical system of Example 6.

[Fig. 12] Fig. 12 is an aberration diagram illustrating various aberrations of the image-capturing optical system of Example 6.

[Fig. 13] Fig. 13 is a diagram illustrating a configuration of an image-capturing optical system of Example 7.

[Fig. 14] Fig. 14 is an aberration diagram illustrating various aberrations of the image-capturing optical system of Example 7.

[Fig. 15] Fig. 15 is a diagram illustrating a configuration of an image-capturing optical system of Example 8.

[Fig. 16] Fig. 16 is an aberration diagram illustrating various aberrations of the image-capturing optical system of Example 8.

[Fig. 17] Fig. 17 is a diagram illustrating a configuration of an image-capturing optical system of Example 9.

[Fig. 18] Fig. 18 is an aberration diagram illustrating various aberrations of the image-capturing optical system of Example 9.

[Fig. 19] Fig. 19 is a diagram illustrating a configuration of an image-capturing optical system of Example 10.

[Fig. 20] Fig. 20 is an aberration diagram illustrating various aberrations of the image-capturing optical system of Example 10.

[Fig. 21] Fig. 21 is a diagram illustrating a configuration of an image-capturing optical system of Example 11.

[Fig. 22] Fig. 22 is an aberration diagram illustrating various aberrations of the image-capturing optical system of Example 11.

[Fig. 23] Fig. 23 is a diagram illustrating a configuration of an image-capturing device according to an embodiment of the present disclosure.

[Fig. 24] Fig. 24 is a diagram illustrating a configuration of a vehicle according to an embodiment of the present disclosure.

Description of Embodiments

According to the present embodiment, an image-capturing optical system, an image-capturing device, and a vehicle that achieve both a wide angle of view and a high definition in a central region of a screen at low cost can be provided.

The present embodiment will be described below with reference to the drawings. The drawings that will be referred to in the following description are schematic diagrams. The dimensional ratios and so forth of the objects illustrated in the drawings may sometimes be different from those of the actual objects.

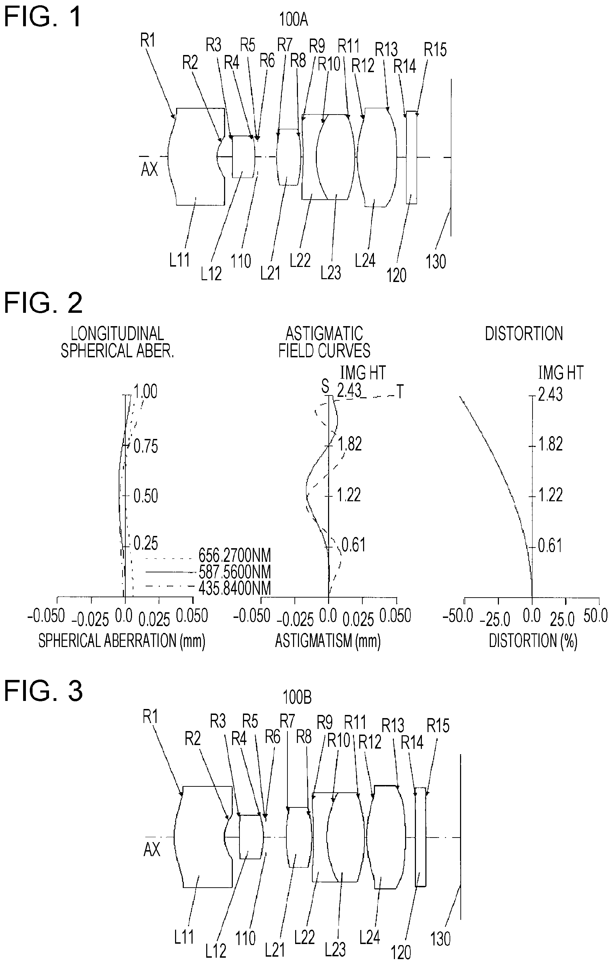

A lens configuration of a six-element image-capturing optical system 100 according to an embodiment will be described with reference to Fig. 1 illustrating a configuration of an image-capturing optical system 100A of Example 1. An optical axis of the image-capturing optical system 100A is denoted by AX. The image-capturing optical system 100A of the present embodiment is a six-element single-focus image-capturing optical system 100 including a first lens L11 of a first lens group L1 having a negative refractive power, a second lens L12 of the first lens group L1 having a positive refractive power, an on-axis luminous flux regulating diaphragm 110, a first lens L21 of a second lens group L2, a second lens L22 of the second lens group L2, a third lens L23 of the second lens group L2, a fourth lens L24 of the second lens group L2, a flat plate 120, and an imaging plane 130 that serves as a light receiving surface of an image-capturing device such as a charge coupled device (CCD) or a complementary metal oxide semiconductor (CMOS) device that are arranged in this order starting from an object side. The first lens group L1 that includes the first lens L11 and the second lens L12 of the first lens group L1 has a negative refractive power as a whole. The second lens group L2 that includes the first lens L21 to the fourth lens L24 of the second lens group L2 has a positive refractive power as a whole. Surface numbers R1 to R15 are assigned to surfaces of the lenses L11, L120, L21 to L24 and the flat plate 120 on the object side, surfaces of the lenses L11, L120, L21 to L24 and the flat plate 120 on an image side, and surfaces of the on-axis luminous flux regulating diaphragm 110 in this order starting from the object side. This configuration is common to Examples 2, 3, 4, 6, 7, and 11, which will be described later, and thus, in these Examples, components that are the same as those in Example 1 are denoted by the same reference signs. In the following description, the image-capturing optical systems of Examples 1, 2, 3, 4, 6, 7, and 11 will be referred to as image-capturing optical systems 100A, 100B, 100C, 100D, 100F, 100G, and 100K.

A lens configuration of a six-element wide angle image-capturing optical system 100 according to another embodiment will be described with reference to Fig. 2 illustrating a configuration of an image-capturing optical system 100J of Example 10. The optical axis of the image-capturing optical system 100A is denoted by AX. The image-capturing optical system 100A of the present embodiment is a six-element single-focus image-capturing optical system 100 including the first lens L11 of the first lens group L1 having a positive refractive power, the second lens L12 of the first lens group L1 having a negative refractive power, a third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the flat plate 120, and the imaging plane 130 that serves as a light receiving surface of an image-capturing device such as a charge coupled device (CCD) or a complementary metal oxide semiconductor (CMOS) device that are arranged in this order starting from the object side. The first lens group L1 that includes the first lens L11 to the third lens L13 of the first lens group L1 has a negative refractive power as a whole. The second lens group L2 that includes the first lens L21 to the third lens L23 of the second lens group L2 has a positive refractive power as a whole. Surface numbers R1 to R17 are assigned to the surfaces of the lenses L11 to L13, L21 to L23 and the flat plate 120 on the object side, the surfaces of the lenses L11 to L13, L21 to L23 and the flat plate 120 on the image side, and the surfaces of the on-axis luminous flux regulating diaphragm 110 in this order starting from the object side. In the following description, the image-capturing optical system of Example 10 will be referred to as image-capturing optical system 100J.

A lens configuration of a seven-element wide angle image-capturing optical system 100 according to an embodiment will be described with reference to Fig. 2 illustrating a configuration of an image-capturing optical system 100E of Example 5. The optical axis of the image-capturing optical system 100A is denoted by AX. The image-capturing optical system 100A of the present embodiment is a six-element single-focus image-capturing optical system 100 including the first lens L11 of the first lens group L1 having a positive refractive power, the second lens L12 of the first lens group L1 having a negative refractive power, the third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 that serves as a light receiving surface of an image-capturing device such as a charge coupled device (CCD) or a complementary metal oxide semiconductor (CMOS) device that are arranged in this order starting from the object side. The first lens group L1 that includes the first lens L11 to the third lens L13 of the first lens group L1 has a negative refractive power as a whole. The second lens group L2 that includes the first lens L21 to the fourth lens L24 of the second lens group L2 has a positive refractive power as a whole. Surface numbers R1 to R17 are assigned to the surfaces of the lenses L11 to L13, L21 to L24 and the flat plate 120 on the object side, the surfaces of the lenses L11 to L13, L21 to L24 and the flat plate 120 on the image side, and the surfaces of the on-axis luminous flux regulating diaphragm 110 in this order starting from the object side. This configuration is common to Examples 8 and 9, which will be described later, and thus, in these Examples, components that are the same as those in the above Examples are denoted by the same reference signs. In the following description, the image-capturing optical systems of Examples 5, 8, and 9 will be referred to as image-capturing optical systems 100E, 100H, and 100I. The image-capturing optical system of the present embodiment including the image-capturing optical systems of Examples 1 to 11 will hereinafter be collectively referred to as image-capturing optical system 100.

Refractive power arrangements of the first lens group L1 and the second lens group L2 of the present embodiment will be described. In an imaging optical system of the present embodiment, in order to generate a large negative distortion, the power of a lens that is included in the first lens group L1 and that has a negative refractive power is set to be large.

In the imaging optical system of the present embodiment, a surface of a lens that is included in the first lens group L1 and that has a negative refractive power, the surface being located on the object side, was a convex surface facing an object in a paraxial region and an aspherical surface having a shape with which convex power decreases with increasing distance from an optical axis. As a result, a large distortion can be generated while spherical aberration and coma are suppressed. However, it is desirable that the surface of the lens, which is included in the first lens group L1 and which has a negative refractive power, on the object side have no inflection point for processing and appearance reasons.

In addition, it is desirable that the focal length of the lens, which is included in the first lens group L1 and which has a negative refractive power, satisfy the following conditional expressions in order to generate a large negative distortion while efficiently correcting various aberrations.

$$-1.30 < fn/f < -0.6 \ \ldots \ (1)$$

$$Di/\tan\omega/100 < -0.4 \ \ldots \ (2)$$

$$2\omega \leq 120° \ \ldots \ (3)$$

where:

f: the focal length of the entire lens system
fn: the focal length of a negative lens of the first lens group
Di: the distortion at a maximum angle of view (unit: %)
$\omega$: the incident angle of a maximum angle of view light beam on the object side

The conditional expression (1) specifies a preferable range of the ratio of the focal length of the lens, which is included in the first lens group L1 and which has a negative refractive power, to the focal length of the entire lens system for generating a large negative distortion while efficiently correcting various aberrations including spherical aberration. If the lower limit of the conditional expression (1) is exceeded, the focal length of the negative lens of the first lens group L1 becomes long for the entire system, and a sufficiently large distortion cannot be generated. If the upper limit of the conditional expression (1) is exceeded, the refractive power of the negative lens of the first lens group L1 becomes too large, which makes it difficult to correct spherical aberration and coma. Preferably, the range of the conditional expression (1) is set as follows, so that an advantageous effect of the present embodiment can be further easily obtained.

$$-1.20 < fn/f < -0.7 \ \ldots \ (1)'$$

The conditional expression (2) specifies the relationship between distortion at the maximum image height for obtaining fovea centralis projection characteristics of the lens and the angle of incidence on the object side at that time. If a negative distortion becomes too large for a desired angle of view, the peripheral image becomes smaller than the central image, so that the viewability deteriorates, making it difficult to recognize an object. If the negative distortion becomes too small for the desired angle of view, an object at the center of a screen cannot be sufficiently enlarged, and the advantageous effect of the present embodiment cannot be sufficiently obtained. Preferably, the range of the conditional expression (2) is set as follows, so that the advantageous effect of the present embodiment can be obtained with higher certainty.

$$Di/\tan\omega/100 < -0.5 \ \ldots \ (2)'$$

The present disclosure can further achieve size reduction while efficiently correcting various aberrations by satisfying the following conditional expression (4).

$$0.8 < fpf/fb < 2.2 \ \ldots \ (4)$$

where:

fpf: the focal length of a positive refractive power lens on the most image side in the first lens group L1
fb: the composite focal length of the positive refractive power lens on the most image side in the first lens group L1 and the second lens group

The conditional expression (4) specifies the range of the ratio of the focal length of a positive refractive power lens on the most image side in the first lens group L1 to the composite focal length of the positive refractive power lens on the most image side in the first lens group L1 and the second lens group. If the upper limit of the conditional expression (4) is exceeded, and the focal length of a lens that has a positive refractive power and that is located on the most diaphragm side in the first lens group L1 is increased, the entire lens length becomes long, which is not suitable for size reduction. Contrary to this, if the lower limit of the conditional expression (4) is exceeded, and the focal length of a lens that has a positive refractive power and that is located on the most diaphragm side in the first lens group L1 is decreased, spherical aberration and coma occur, and it becomes difficult to increase the diameter. Preferably, the range of the conditional expression (4) is set as follows, so that the advantageous effects of the present disclosure can be obtained with higher certainty.

$$1.0 < fpf/fb < 2.0 \ \ldots \ (4)'$$

Examples 1 to 11 based on specific numerical values of an image-capturing lens 100 will be described below. In Numerical Examples of Examples 1 to 11, the focal length, the F-value number, the maximum image height, the entire lens length, and the numerical data of each conditional expression are illustrated in the following Table 1.

[Table 1]

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Focal Length | 5.8320 | 5.8319 | 5.8319 | 5.8317 | 5.8319 | 4.8646 | 4.8646 | 6.4999 | 6.5000 | 6.4999 | 5.8321 |
| F number | 2.8201 | 2.8003 | 2.8002 | 2.1441 | 2.7858 | 2.7979 | 2.2304 | 2.7983 | 2.0151 | 2.0040 | 2.8149 |
| Maximum Image Height | 2.4300 | 2.4300 | 2.4300 | 2.4300 | 2.4300 | 2.4300 | 2.4300 | 2.4300 | 2.4300 | 2.4300 | 2.4300 |
| Entire Lens Length | 18.6726 | 18.6730 | 18.6729 | 18.6748 | 21.9993 | 18.6715 | 18.6717 | 23.0968 | 21.9724 | 21.9724 | 18.6724 |
| fn | -7.3543 | -6.7343 | -5.6907 | -5.6487 | -4.5035 | -5.6605 | -6.0321 | -4.6174 | -4.5732 | -4.7830 | -7.5002 |
| Di | -0.5371 | -0.5371 | -0.5339 | -0.5344 | -0.5465 | -0.3334 | -0.3352 | -0.3141 | -0.3141 | -0.3141 | -0.5633 |
| fpf | 7.4993 | 6.7589 | 5.8364 | 5.5016 | 5.8773 | 7.9506 | 8.4235 | 8.5262 | 9.0340 | 7.8244 | 7.3820 |
| fb | 4.8523 | 4.8710 | 4.8801 | 5.0837 | 4.5642 | 4.7212 | 4.7382 | 4.6629 | 4.5797 | 5.2543 | 4.7849 |
| Conditional Expression (1) | -1.2610 | -1.1547 | -0.9758 | -0.9686 | -0.7722 | -1.1636 | -1.2400 | -0.7104 | -0.7036 | -0.7359 | -1.2860 |
| Conditional Expression (2) | -0.5967 | -0.5967 | -0.5973 | -0.5971 | -0.5948 | -0.4449 | -0.4461 | -0.5763 | -0.5763 | -0.5763 | -0.5903 |
| Conditional Expression (3)(Full Angle of View 2ω) | 83.9861 | 83.9848 | 83.5873 | 83.6519 | 85.1491 | 73.6926 | 73.8462 | 57.1874 | 57.1850 | 57.1852 | 87.3139 |
| Conditional Expression (4) | 1.5455 | 1.3876 | 1.1960 | 1.0822 | 1.2877 | 1.6840 | 1.7778 | 1.8285 | 1.9726 | 1.4891 | 1.5428 |

Various Data Items

<Example 1>

Fig. 1 illustrates the basic configuration of the image-capturing optical system 100A in the first embodiment 1. The area data and the aspherical data of the image-capturing optical system of Example 1 are illustrated in Table 2 and Table 3, respectively. Fig. 2 is an aberration diagram illustrating spherical aberration, astigmatism and distortion.

As illustrated in Fig. 1, in the image-capturing optical system 100A, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. A surface of the lens L11 having the negative refractive power, the surface being located on the object side (hereinafter referred to as "object-side surface"), is a convex surface in a paraxial region and has an aspherical surface having a shape with which convex power decreases with increasing distance from an optical axis. The amount of sag of the object-side surface of the lens L11 and the amount of sag of a surface of the lens L11 that is located on the image side (hereinafter referred to as "image-side surface") both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. A surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 2 illustrates a diaphragm, a curvature radius r (mm), a distance d (mm), a refractive index N (d), an Abbe number vd, and an effective diameter of each of the lenses corresponding to the surface numbers of the image-capturing optical system 100A in Example 1. In Table 2, the symbol "*" is given to some of the surface numbers, and this indicates that the corresponding surface has an aspherical shape. As illustrated in Table 2, the two surfaces of the lens L11 and the two surfaces of the lens L24 are aspherical surfaces (the same applies to the following Examples). Table 3 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 1, and the distance d in the column of the surface number 2 indicates the distance between the surface R2 and the surface R3 in Fig. 1.

Numerical Example 1

[Table 2]

| Surface Number | r | d | N(d) | vd | Effective Diameter |
|---|---|---|---|---|---|
| 1* | 4.5736 | 3.2510 | 1.7645 | 49.0969 | 2.941 |
| 2* | 1 .7453 | 0.9905 | | | 1.400 |
| 3 | 119.5920 | 1.5231 | 1.6727 | 32.0992 | 1.261 |
| 4 | -5.2400 | 0.1500 | | | 1.064 |
| 5(Diaphragm) | ∞ | 0.8436 | | | 0.980 |
| 6 | ∞ | 0.4275 | | | 1.032 |
| 7 | 11.1267 | 1.5930 | 1.43875 | 94.6611 | 1.303 |
| 8 | -8.2442 | 0.1499 | | | 1.706 |

(continued)

| Surface Number | r | d | N(d) | νd | Effective Diameter |
|---|---|---|---|---|---|
| 9 | -24.9615 | 0.8495 | 1 .84666 | 23.7779 | 1.797 |
| 10 | 5.5122 | 2.5558 | 1.6779 | 55.3412 | 2.079 |
| 11 | -8.2889 | 0.1500 | | | 2.580 |
| 12* | 6.2460 | 2.5886 | 1.58913 | 61.1526 | 2.856 |
| 13* | -321.2490 | 0.6364 | | | 3.000 |
| 14 | ∞ | 0.7000 | 1.51633 | 64.142 | 2.833 |
| 15 | ∞ | 2.2637 | | | 2.765 |
| Image Plane | ∞ | 0.0000 | | | 2.434 |
| Area Data "*" indicates aspherical surface | | | | | |

[Table 3]

|    | K          | A4          | A6           | A8           | A10          | A12          | A14         | A16          |
|----|------------|-------------|--------------|--------------|--------------|--------------|-------------|--------------|
| 1  | 0.00000E+00 | -4.61150E-03 | 7.98060E-05  | -1.34150E-04 | 2.35430E-05  | -2.03620E-06 | 9.14450E-08 | -1.65850E-09 |
| 2  | 0.00000E+00 | -4.22420E-02 | 4.82280E-03  | -1.08910E-02 | 5.21700E-03  | -1.12790E-03 | 0.00000E+00 | 0.00000E+00  |
| 12 | 0.00000E+00 | -3.07460E-03 | -2.22220E-05 | 3.80980E-05  | -6.10780E-06 | 2.28850E-07  | 0.00000E+00 | 0.00000E+00  |
| 13 | 0.00000E+00 | -1.09360E-02 | 9.07640E-04  | -3.19290E-05 | -2.25260E-06 | 1.39070E-07  | 0.00000E+00 | 0.00000E+00  |

Aspherical Data

<Example 2>

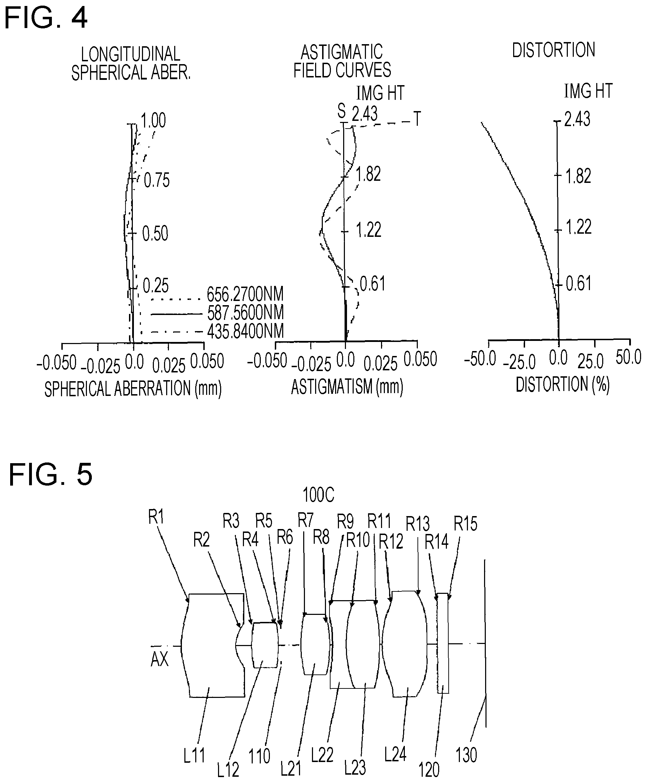

Fig. 3 illustrates the basic configuration of the image-capturing optical system 100B in the second embodiment. The area data and the aspherical data of the image-capturing optical system of Example 2 are illustrated in Table 4 and Table 5, respectively. Fig. 4 is an aberration diagram illustrating spherical aberration, astigmatism and distortion.

As illustrated in Fig. 3, in the image-capturing optical system 100B, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from the optical axis. The amount of sag of the object-side surface of the lens L11 and the amount of sag of the image-side surface of the lens L11 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 4 illustrates the diaphragm, the curvature radius r (mm), the distance d (mm), the refractive index N (d), the Abbe number vd, and the effective diameter of each of the lenses corresponding to the surface numbers of the image-capturing optical system 100B in Example 1. In Table 4, the symbol "*" is given to some of the surface numbers, and this indicates that the corresponding surface has an aspherical shape. As illustrated in Table 4, the two surfaces of the lens L11 and the two surfaces of the lens L24 are aspherical surfaces. Table 5 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 3, and the distance d in the column of the surface number 2 indicates the distance between the surface R2 and the surface R3 in Fig. 3.

Numerical Example 2

[Table 4]

| Surface Number | r | d | N(d) | vd | Effective Diameter |
|---|---|---|---|---|---|
| 1* | 4.6711 | 3.2734 | 1.851348 | 40.1045 | 2.911 |
| 2* | 1 .7445 | 0.9879 | | | 1.400 |
| 3 | 42.6317 | 1.5472 | 1.6727 | 32.0992 | 1.271 |
| 4 | -5.0152 | 0.1500 | | | 1.076 |
| 5(Diaphragm) | ∞ | 0.8925 | | | 0.990 |
| 6 | ∞ | 0.4763 | | | 1.032 |
| 7 | 10.1319 | 1.6283 | 1.43875 | 94.6611 | 1.330 |
| 8 | -8.0200 | 0.1499 | | | 1.724 |
| 9 | -20.3508 | 0.8486 | 1.84666 | 23.7779 | 1.807 |

(continued)

| Surface Number | r | d | N(d) | νd | Effective Diameter |
|---|---|---|---|---|---|
| 10 | 5.8807 | 2.4444 | 1.6779 | 55.3412 | 2.086 |
| 11 | -8.8446 | 0.1500 | | | 2.562 |
| 12* | 5.9547 | 2.5240 | 1.58913 | 61.1526 | 2.846 |
| 13* | -314.9468 | 0.6364 | | | 3.000 |
| 14 | ∞ | 0.7000 | 1.51633 | 64.142 | 2.835 |
| 15 | ∞ | 2.2641 | | | 2.767 |
| Image Plane | ∞ | 0.0000 | | | 2.434 |
| Area Data "*" indicates aspherical surface | | | | | |

[Table 5]

| | K | A4 | A6 | A8 | A10 | A12 | A14 | A16 |
|---|---|---|---|---|---|---|---|---|
| 1 | 0.00000E+00 | -4.33120E-03 | 4.41860E-05 | -1.15500E-04 | 1.99780E-05 | -1.70970E-06 | 7.68540E-08 | -1.39750E-09 |
| 2 | 0.00000E+00 | -4.32220E-02 | 4.68280E-03 | -1.07720E-02 | 5.18660E-03 | -1.12790E-03 | 0.00000E+00 | 0.00000E+00 |
| 12 | 0.00000E+00 | -3.15670E-03 | 2.53490E-05 | 2.61260E-05 | -4.63800E-06 | 1.58270E-07 | 0.00000E+00 | 0.00000E+00 |
| 13 | 0.00000E+00 | -1.05890E-02 | 9.02470E-04 | -3.27810E-05 | -2.16330E-06 | 1.31810E-07 | 0.00000E+00 | 0.00000E+00 |

Aspherical Data

<Example 3>

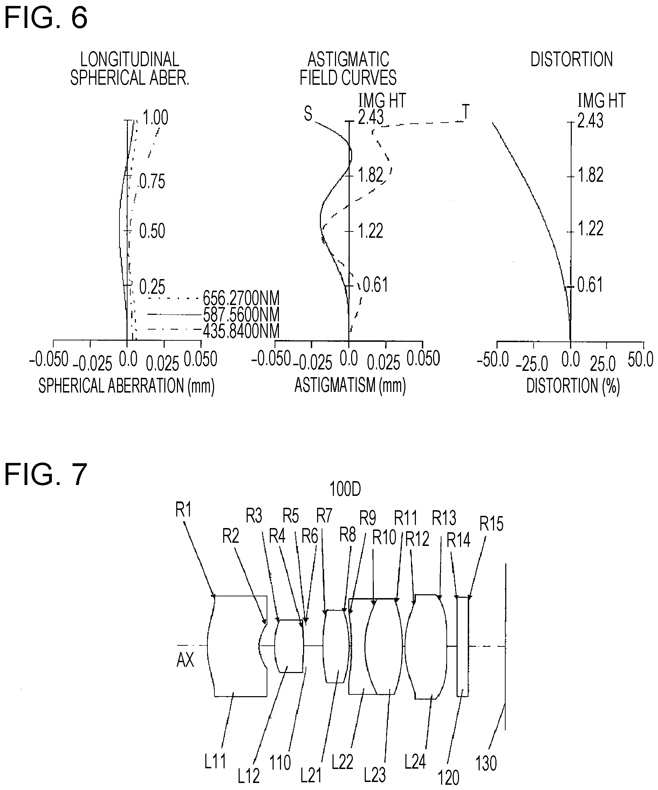

Fig. 5 illustrates the basic configuration of the image-capturing optical system 100C in the third embodiment. The area data and the aspherical data of the image-capturing optical system of Example 3 are illustrated in Table 6 and Table 7, respectively. Fig. 6 is an aberration diagram illustrating spherical aberration, astigmatism and distortion.

As illustrated in Fig. 5, in the image-capturing optical system 100C, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from an optical axis. The amount of sag of the object-side surface of the lens L11 and the amount of sag of the image-side surface of the lens L11 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 6 illustrates the diaphragm, the curvature radius r (mm), the distance d (mm), the refractive index N (d), the Abbe number νd, and the effective diameter of each of the lenses corresponding to the surface numbers of the image-capturing optical system 100C in Example 1. In Table 6, the symbol "*" is given to some of the surface numbers, and this indicates that the corresponding surface has an aspherical shape. As illustrated in Table 6, the two surfaces of the lens L11 and the two surfaces of the lens L24 are aspherical surfaces. Table 7 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 5, and the distance d in the column of the surface number 2 indicates the distance between the surface R2 and the surface R3 in Fig. 5.

Numerical Example 3

[Table 6]

| Surface Number | r | d | N(d) | νd | Effective Diameter |
|---|---|---|---|---|---|
| 1* | 5.0937 | 3.3500 | 1.851348 | 40.1045 | 2.918 |
| 2* | 1.7321 | 0.9832 | | | 1.400 |
| 3 | 8.3800 | 1.6149 | 1.6727 | 32.0992 | 1.277 |
| 4 | -6.8146 | 0.1500 | | | 1.094 |
| 5(Diaphragm) | ∞ | 0.8313 | | | 1.020 |
| 6 | ∞ | 0.4151 | | | 1.032 |
| 7 | 7.9980 | 1.7724 | 1.43875 | 94.6611 | 1.306 |
| 8 | -6.7929 | 0.1499 | | | 1.704 |
| 9 | -11.0605 | 0.8415 | 1.84666 | 23.7779 | 1.767 |

(continued)

| Surface Number | r | d | N(d) | νd | Effective Diameter |
|---|---|---|---|---|---|
| 10 | 7.8348 | 2.0541 | 1.6779 | 55.3412 | 2.052 |
| 11 | -11.7873 | 0.1500 | | | 2.482 |
| 12* | 4.9079 | 2.7600 | 1.58913 | 61.1526 | 2.826 |
| 13* | -308.5825 | 0.6364 | | | 3.000 |
| 14 | ∞ | 0.7000 | 1.51633 | 64.142 | 2.833 |
| 15 | ∞ | 2.2641 | | | 2.766 |
| Image Plane | ∞ | 0.0000 | | | 2.437 |
| Area Data "*" indicates aspherical surface | | | | | |

[Table 7]

|    | K          | A4          | A6          | A8          | A10         | A12         | A14         | A16         |
|----|------------|-------------|-------------|-------------|-------------|-------------|-------------|-------------|
| 1  | 0.00000E+00 | -4.77950E-03 | 1.44970E-05 | -8.03500E-05 | 1.06370E-05 | -2.50020E-07 | -2.58780E-08 | 1.19230E-09 |
| 2  | 0.00000E+00 | -4.69270E-02 | 4.53550E-03 | -1.00790E-02 | 5.00970E-03 | -1.12790E-03 | 0.00000E+00 | 0.00000E+00 |
| 12 | 0.00000E+00 | -3.54180E-03 | -2.66980E-04 | 8.57150E-05 | -1.12730E-05 | 4.14540E-07 | 0.00000E+00 | 0.00000E+00 |
| 13 | 0.00000E+00 | -1.02020E-02 | 6.29940E-04 | 1.67650E-05 | -6.79730E-06 | 2.94400E-07 | 0.00000E+00 | 0.00000E+00 |

Aspherical Data

<Example 4>

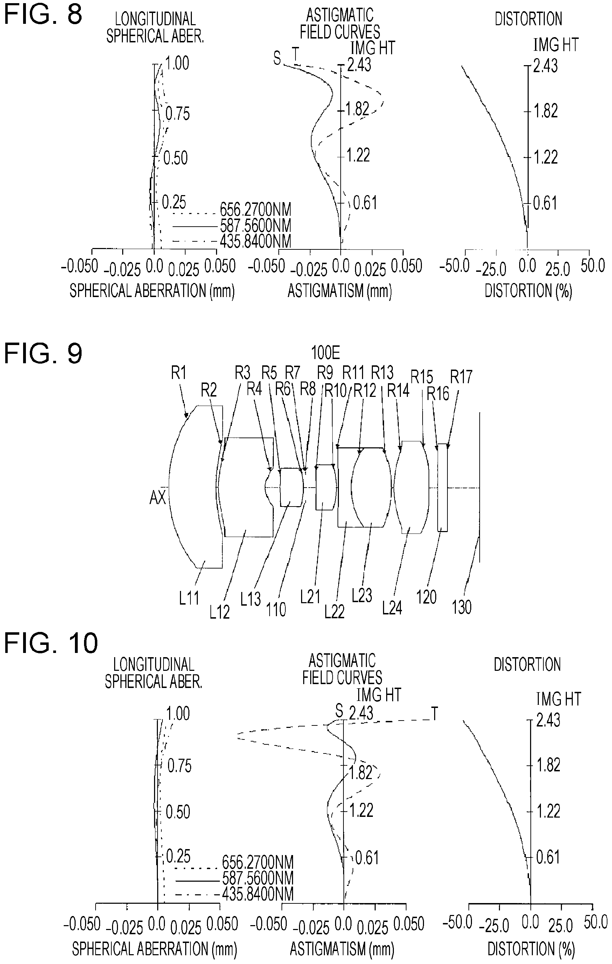

Fig. 7 illustrates the basic configuration of the image-capturing optical system 100D in the fourth embodiment. The area data and the aspherical data of the image-capturing optical system of Example 4 are illustrated in Table 8 and Table 9, respectively. Fig. 8 is an aberration diagram illustrating spherical aberration, astigmatism and distortion.

As illustrated in Fig. 7, in the image-capturing optical system 100D, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from an optical axis. The amount of sag of the object-side surface of each of the lenses L11 and L12 and the amount of sag of the image-side surface of each of the lenses L11 and L12 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 8 illustrates the diaphragm, the curvature radius r (mm), the distance d (mm), the refractive index N (d), the Abbe number vd, and the effective diameter of each of the lenses corresponding to the surface numbers of the image-capturing optical system 100D in Example 1. In Table 8, the symbol "*" is given to some of the surface numbers, and this indicates that the corresponding surface has an aspherical shape. As illustrated in Table 8, the two surfaces of the lens L11, the two surfaces of the lens L12, and the two surfaces of the lens L24 are aspherical surfaces. Table 9 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 7, and the distance d in the column of the surface number 2 indicates the distance between the surface R2 and the surface R3 in Fig. 7.

Numerical Example 4

[Table 8]

| Surface Number | r | d | N(d) | vd | Effective Diameter |
|---|---|---|---|---|---|
| 1* | 5.1030 | 3.2331 | 1.851348 | 40.1045 | 2.874 |
| 2* | 1.7545 | 0.9780 | | | 1.400 |
| 3* | 5.4199 | 1.8099 | 1.6727 | 32.0992 | 1.503 |
| 4* | -10.1020 | 0.1500 | | | 1.345 |
| 5(Diaphragm) | ∞ | 0.7514 | | | 1.300 |
| 6 | ∞ | 0.3353 | | | 1.613 |
| 7 | 12.1364 | 1.6160 | 1.43875 | 94.6611 | 1.811 |
| 8 | -7.3407 | 0.1499 | | | 2.074 |
| 9 | -15.0215 | 0.8423 | 1. 84666 | 23.7779 | 2.132 |

(continued)

| Surface Number | r | d | N(d) | νd | Effective Diameter |
|---|---|---|---|---|---|
| 10 | 6.2420 | 2.3507 | 1.6779 | 55.3412 | 2.381 |
| 11 | -9.3867 | 0.1500 | | | 2.730 |
| 12* | 5.3283 | 2.6359 | 1.58913 | 61.1526 | 2.961 |
| 13* | -312.9930 | 0.6364 | | | 3.000 |
| 14 | ∞ | 0.7000 | 1.51633 | 64.142 | 2.836 |
| 15 | ∞ | 2.3341 | | | 2.769 |
| Image Plane | ∞ | 0.0000 | | | 2.434 |
| Area Data "*" indicates aspherical surface | | | | | |

[Table 9]

| | K | A4 | A6 | A8 | A10 | A12 | A14 | A16 |
|---|---|---|---|---|---|---|---|---|
| 1 | 0.00000E+00 | -5.10030E-03 | -7.07180E-05 | -3.49240E-05 | -2.11100E-06 | 1.58730E-06 | -1.48060E-07 | 4.20390E-09 |
| 2 | 0.00000E+00 | -4.58330E-02 | 7.30390E-03 | -1.19110E-02 | 5.71100E-03 | -1.12790E-03 | 0.00000E+00 | 0.00000E+00 |
| 3 | 0.00000E+00 | 4.78180E-03 | 7.33270E-04 | 1.51370E-04 | 1.75560E-04 | 0.00000E+00 | 0.00000E+00 | 0.00000E+00 |
| 4 | 0.00000E+00 | 4.99370E-03 | 6.83400E-04 | -3.59950E-04 | 3.80410E-04 | 0.00000E+00 | 0.00000E+00 | 0.00000E+00 |
| 12 | 0.00000E+00 | -3.22760E-03 | 9.64440E-05 | -1.62300E-05 | 1.65610E-06 | -1.36170E-07 | 0.00000E+00 | 0.00000E+00 |
| 13 | 0.00000E+00 | -1.04850E-02 | 9.69580E-04 | -7.26860E-05 | 3.55580E-06 | -1.20150E-07 | 0.00000E+00 | 0.00000E+00 |

Aspherical Data

<Example 5>

Fig. 9 illustrates the basic configuration of the image-capturing optical system 100E in the fifth embodiment. The area data and the aspherical data of the image-capturing optical system of Example 5 are illustrated in Table 10 and Table 11, respectively. Fig. 10 is an aberration diagram illustrating spherical aberration, astigmatism and distortion.

As illustrated in Fig. 9, in the image-capturing optical system 100E, the first lens L11 of the first lens group L1 having a positive refractive power, the second lens L12 of the first lens group L1 having a negative refractive power, the third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L12 having the negative refractive power is a convex surface in a paraxial region and has an aspherical surface having a shape with which convex power decreases with increasing distance from an optical axis. The amount of sag of the object-side surface of the lens L12 and the amount of sag of the image-side surface of the lens L12 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 10 illustrates the diaphragm, the curvature radius r (mm), the distance d (mm), the refractive index N (d), the Abbe number νd, and the effective diameter of each of the lenses corresponding to the surface numbers of the image-capturing optical system 100E in Example 5. In Table 10, the symbol "*" is given to some of the surface numbers, and this indicates that the corresponding surface has an aspherical shape. As illustrated in Table 10, the two surfaces of the lens L12 and the two surfaces of the lens L24 are aspherical surfaces. Table 11 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 9, and the distance d in the column of the surface number 2 indicates the distance between the surface R2 and the surface R3 in Fig. 9.

Numerical Example 5

[Table 10]

| Surface Number | r | d | N(d) | νd | Effective Diameter |
|---|---|---|---|---|---|
| 1 | 9.3720 | 3.3825 | 1.58144 | 40.8907 | 5.275 |
| 2 | 12.6649 | 0.1499 | | | 3.435 |
| 3* | 5.8557 | 3.3499 | 1.882023 | 37.2213 | 3.200 |
| 4* | 1.7322 | 1.0379 | | | 1.400 |
| 5 | 18.5611 | 1.6377 | 1.68893 | 31.1605 | 1.238 |
| 6 | -4.9924 | 0.1500 | | | 0.950 |
| 7(Diaphragm) | ∞ | 0.5707 | | | 0.910 |
| 8 | ∞ | 0.1706 | | | 0.950 |

(continued)

| Surface Number | r | d | N(d) | νd | Effective Diameter |
|---|---|---|---|---|---|
| 9 | -19.7979 | 1.4353 | 1.43875 | 94.6611 | 1.050 |
| 10 | -5.0868 | 0.1499 | | | 1.477 |
| 11 | -37.5129 | 0.8406 | 1. 84666 | 23.7779 | 1.618 |
| 12 | 4.7215 | 2.8734 | 1.6779 | 55.3412 | 1.923 |
| 13 | -7.0921 | 0.1500 | | | 2.564 |
| 14* | 5.9316 | 2.5009 | 1.58913 | 61.1526 | 2.908 |
| 15* | -281.2087 | 0.6364 | | | 3.000 |
| 16 | ∞ | 0.7000 | 1.51633 | 64.142 | 2.841 |
| 17 | ∞ | 2.263608 | | | 2.772177 |
| Image Plane | ∞ | 0 | | | 2.434638 |
| Area Data "*" indicates aspherical surface | | | | | |

[Table 11]

| | K | A4 | A6 | A8 | A10 | A12 | A14 | A16 |
|---|---|---|---|---|---|---|---|---|
| 3 | 0.00000E+00 | -3.69800E-03 | -1.15750E-05 | -2.85950E-05 | -1.19810E-06 | 1.20660E-06 | -1.26320E-07 | 4.01340E-09 |
| 4 | 0.00000E+00 | -3.68650E-02 | -2.76600E-04 | -6.39860E-03 | 4.02160E-03 | -1.12790E-03 | 0.00000E+00 | 0.00000E+00 |
| 14 | 0.00000E+00 | -1.86470E-03 | -3.93100E-04 | 1.13220E-04 | -1.08900E-05 | 2.72770E-07 | 0.00000E+00 | 0.00000E+00 |
| 15 | 0.00000E+00 | -8.40580E-03 | 1.41650E-04 | 1.16920E-04 | -1.45910E-05 | 4.85670E-07 | 0.00000E+00 | 0.00000E+00 |

Aspherical Data

<Example 6>

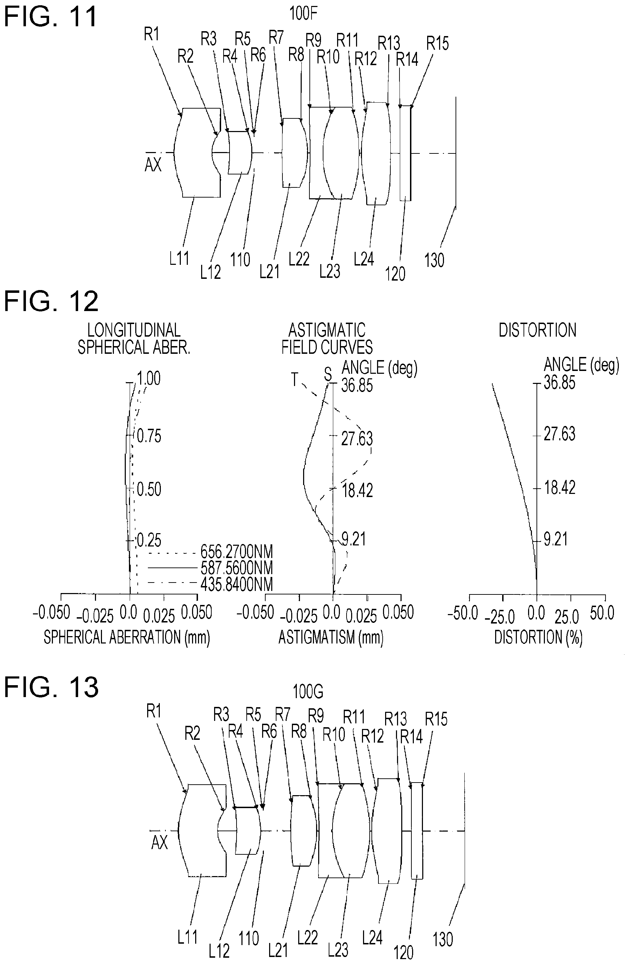

Fig. 11 illustrates the basic configuration of the image-capturing optical system 100F in the sixth embodiment. The area data and the aspherical data of the image-capturing optical system of Example 6 are illustrated in Table 12 and Table 13, respectively. Fig. 12 is an aberration diagram illustrating spherical aberration, astigmatism and distortion.
As illustrated in Fig. 11, in the image-capturing optical system 100A, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.
The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from an optical axis. The amount of sag of the object-side surface of the lens L11 and the amount of sag of the image-side surface of the lens L11 both have no extrema within the effective diameter.
The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.
In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.
Table 12 illustrates the diaphragm, the curvature radius r (mm), the distance d (mm), the refractive index N (d), the Abbe number νd, and the effective diameter of each of the lenses corresponding to the surface numbers of the image-capturing optical system 100A in Example 6. In Table 12, the symbol "*" is given to some of the surface numbers, and this indicates that the corresponding surface has an aspherical shape. As illustrated in Table 12, the two surfaces of the lens L11 and the two surfaces of the lens L24 are aspherical surfaces. Table 13 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 11, and the distance d in the column of the surface number 2 indicates the distance between the surface R2 and the surface R3 in Fig. 11.

Numerical Example 6

[Table 12]

| Surface Number | r | d | N(d) | νd | Effective Diameter |
|---|---|---|---|---|---|
| 1* | 4.4984 | 2.5114 | 1.882023 | 37.2213 | 2.615 |
| 2* | 1.7471 | 1.1796 | | | 1.400 |
| 3 | -8.0911 | 1.4655 | 1.68893 | 31.1605 | 1.256 |
| 4 | -3.5075 | 0.1500 | | | 1.154 |
| 5(Diaphragm) | ∞ | 1.1228 | | | 1.020 |
| 6 | ∞ | 0.7228 | | | 1.373 |
| 7 | 30.0488 | 1.7187 | 1.43875 | 94.6611 | 1.645 |
| 8 | -4.7191 | 0.1499 | | | 2.024 |
| 9 | -52.3273 | 0.8491 | 1.84666 | 23.7779 | 2.161 |

(continued)

| Surface Number | r | d | N(d) | νd | Effective Diameter |
|---|---|---|---|---|---|
| 10 | 6.0900 | 2.3897 | 1.6779 | 55.3412 | 2.366 |
| 11 | -9.1401 | 0.1500 | | | 2.687 |
| 12* | 9.6529 | 1.9353 | 1.58913 | 61.1526 | 2.825 |
| 13* | -111.8614 | 0.6364 | | | 3.000 |
| 14 | ∞ | 0.7000 | 1.51633 | 64.142 | 2.776 |
| 15 | ∞ | 2.9915 | | | 2.730 |
| Image Plane | ∞ | 0.0000 | | | 2.442 |
| Area Data "*" indicates aspherical surface | | | | | |

[Table 13]

|  | K | A4 | A6 | A8 | A10 | A12 | A14 | A16 |
|---|---|---|---|---|---|---|---|---|
| 1 | 0.00000E+00 | -4.17916E-03 | 3.32587E-04 | -2.66553E-04 | 5.51366E-05 | -5.88774E-06 | 3.15347E-07 | -6.59755E-09 |
| 2 | 0.00000E+00 | -2.36689E-02 | -2.58024E-03 | -6.62488E-03 | 4.28329E-03 | -1.12790E-03 | 0.00000E+00 | 0.00000E+00 |
| 12 | 0.00000E+00 | 3.16128E-04 | -4.55704E-04 | 4.90791E-05 | -9.57091E-07 | -1.00681E-07 | 0.00000E+00 | 0.00000E+00 |
| 13 | 0.00000E+00 | -1.02191E-03 | -4.60665E-04 | 5.46433E-05 | -1.32267E-06 | -7.67859E-08 | 0.00000E+00 | 0.00000E+00 |

Aspherical Data

<Example 7>

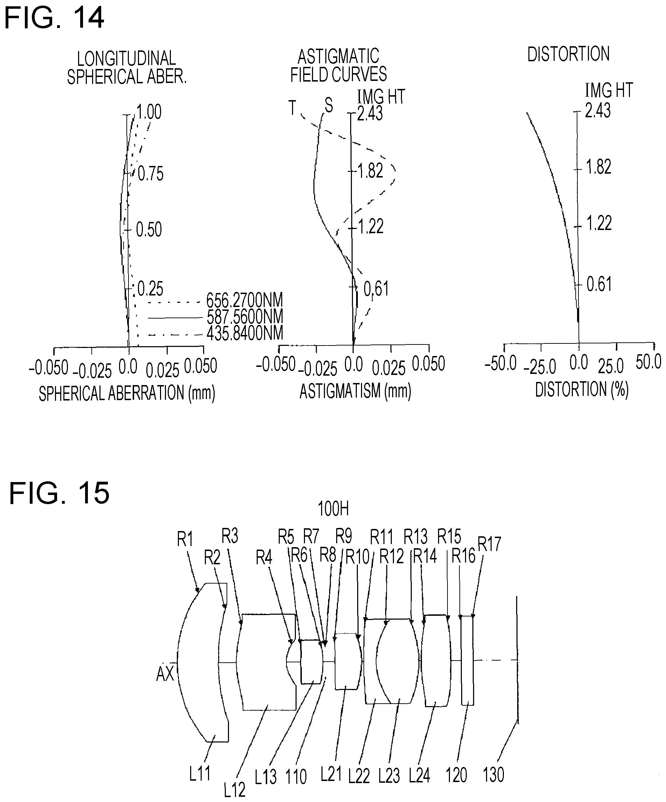

Fig. 13 illustrates the basic configuration of the image-capturing optical system 100G in the seventh embodiment. The area data and the aspherical data of the image-capturing optical system of Example 7 are illustrated in Table 14 and Table 15, respectively. Fig. 14 is an aberration diagram illustrating spherical aberration, astigmatism and distortion.
As illustrated in Fig. 13, in the image-capturing optical system 100A, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.
The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from an optical axis. The amount of sag of the object-side surface of the lens L11 and the amount of sag of the image-side surface of the lens L11 both have no extrema within the effective diameter.
The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.
In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.
Table 14 illustrates the diaphragm, the curvature radius r (mm), the distance d (mm), the refractive index N (d), the Abbe number νd, and the effective diameter of each of the lenses corresponding to the surface numbers of the image-capturing optical system 100A in Example 7. In Table 14, the symbol "*" is given to some of the surface numbers, and this indicates that the corresponding surface has an aspherical shape. As illustrated in Table 14, the two surfaces of the lens L11 and the two surfaces of the lens L24 are aspherical surfaces. Table 15 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 13, and the distance d in the column of the surface number 2 indicates the distance between the surface R2 and the surface R3 in Fig. 13.

Numerical Example 7

[Table 14]

| Surface Number | r | d | N(d) | νd | Effective Diameter |
|---|---|---|---|---|---|
| 1* | 4.3484 | 2.5500 | 1.882023 | 37.2213 | 2.638 |
| 2* | 1.7351 | 1.2575 | | | 1.400 |
| 3 | -10.4249 | 1.5527 | 1.68893 | 31.1605 | 1.340 |
| 4 | -3.9544 | 0.1500 | | | 1.334 |
| 5(Diaphragm) | ∞ | 1.1070 | | | 1.250 |
| 6 | ∞ | 0.7070 | | | 1.450 |
| 7 | 17.0815 | 1.7041 | 1.43875 | 94.6611 | 1.645 |
| 8 | -5.3677 | 0.1499 | | | 2.015 |
| 9 | -71.6024 | 0.8473 | 1.84666 | 23.7779 | 2.145 |

(continued)

| Surface Number | r | d | N(d) | νd | Effective Diameter |
|---|---|---|---|---|---|
| 10 | 5.9142 | 2.4364 | 1.6779 | 55.3412 | 2.350 |
| 11 | -8.8754 | 0.1500 | | | 2.681 |
| 12* | 9.2410 | 1.9494 | 1.58913 | 61.1526 | 2.824 |
| 13* | -110.4266 | 0.6364 | | | 3.000 |
| 14 | ∞ | 0.7000 | 1.51633 | 64.142 | 2.763 |
| 15 | ∞ | 2.7750 | | | 2.716 |
| Image Plane | ∞ | -0.0013 | | | 2.431 |
| Area Data "*" indicates aspherical surface | | | | | |

[Table 15]

|  | K | A4 | A6 | A8 | A10 | A12 | A14 | A16 |
|---|---|---|---|---|---|---|---|---|
| 1 | 0.00000E+00 | -4.29201E-03 | 4.25155E-04 | -2.68442E-04 | 5.28149E-05 | -5.73657E-06 | 3.18311E-07 | -6.90084E-09 |
| 2 | 0.00000E+00 | -2.83169E-02 | 2.34263E-03 | -1.04993E-02 | 5.02650E-03 | -1.12790E-03 | 0.00000E+00 | 0.00000E+00 |
| 12 | 0.00000E+00 | 1.51387E-04 | -1.71207E-04 | 1.23858E-05 | 8.16339E-08 | -8.32338E-08 | 0.00000E+00 | 0.00000E+00 |
| 13 | 0.00000E+00 | -1.03489E-03 | -8.65389E-05 | 3.68995E-06 | 3.40098E-07 | -6.50548E-08 | 0.00000E+00 | 0.00000E+00 |

Aspherical Data

<Example 8>

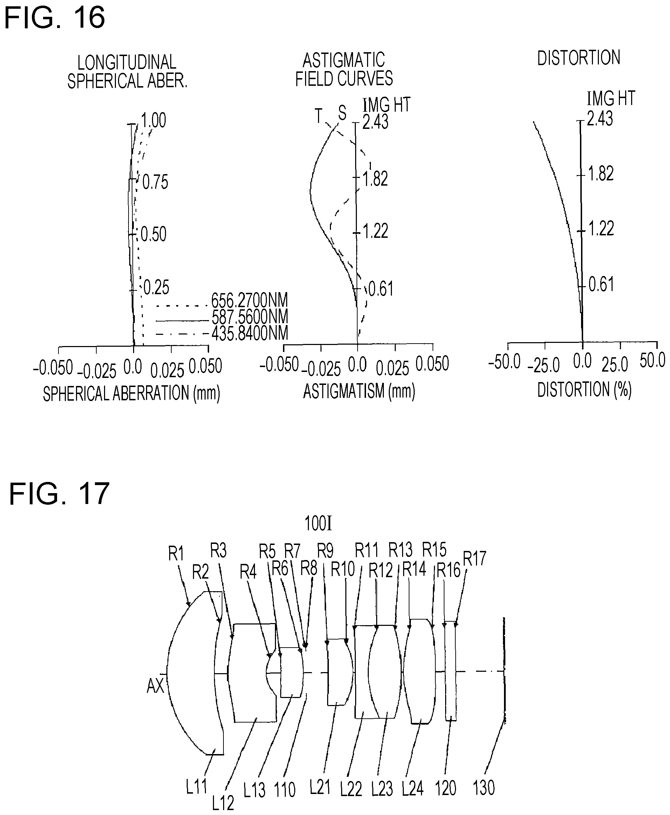

Fig. 15 illustrates the basic configuration of the image-capturing optical system 100H in the eighth embodiment. The area data and the aspherical data of the image-capturing optical system of Example 8 are illustrated in Table 16 and Table 17, respectively. Fig. 16 is an aberration diagram illustrating spherical aberration, astigmatism and distortion.

As illustrated in Fig. 15, in the image-capturing optical system 100E, the first lens L11 of the first lens group L1 having a positive refractive power, the second lens L12 of the first lens group L1 having a negative refractive power, the third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L12 having the negative refractive power is a convex surface in a paraxial region and has an aspherical surface having a shape with which convex power decreases with increasing distance from an optical axis. The amount of sag of the object-side surface of the lens L12 and the amount of sag of the image-side surface of the lens L12 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 16 illustrates the diaphragm, the curvature radius r (mm), the distance d (mm), the refractive index N (d), the Abbe number νd, and the effective diameter of each of the lenses corresponding to the surface numbers of the image-capturing optical system 100E in Example 8. In Table 16, the symbol "*" is given to some of the surface numbers, and this indicates that the corresponding surface has an aspherical shape. As illustrated in Table 16, the two surfaces of the lens L12 and the two surfaces of the lens L24 are aspherical surfaces. Table 17 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 15, and the distance d in the column of the surface number 2 indicates the distance between the surface R2 and the surface R3 in Fig. 15.

Numerical Example 8

[Table 16]

| Surface Number | r | d | N(d) | νd | Effective Diameter |
|---|---|---|---|---|---|
| 1 | 8.3459 | 2.7894 | 1.51633 | 64.142 | 4.897 |
| 2 | 12.7794 | 1.2372 | | | 3.819 |
| 3* | 6.5153 | 3.3500 | 1.7645 | 49.0969 | 2.969 |
| 4* | 1.7794 | 1.0019 | | | 1.560 |
| 5 | 32.7351 | 1.4995 | 1.6727 | 32.0992 | 1.340 |
| 6 | -6.8259 | 0.1671 | | | 1.119 |
| 7(Diaphragm) | ∞ | 0.4960 | | | 1.010 |
| 8 | ∞ | 0.1558 | | | 1.133 |

(continued)

| Surface Number | r | d | N(d) | νd | Effective Diameter |
|---|---|---|---|---|---|
| 9 | 158.8760 | 1.7692 | 1.43875 | 94.6611 | 1.178 |
| 10 | -6.0695 | 0.1671 | | | 1.721 |
| 11 | 40.8897 | 0.8499 | 1.84666 | 23.7779 | 1.899 |
| 12 | 4.7944 | 2.8400 | 1.6779 | 55.3412 | 2.129 |
| 13 | -7.1857 | 0.1671 | | | 2.602 |
| 14* | 11.4310 | 2.0354 | 1.58913 | 61.1526 | 2.761 |
| 15* | -52.7350 | 0.7093 | | | 2.832 |
| 16 | ∞ | 0.7000 | 1.51633 | 64.142 | 2.748 |
| 17 | ∞ | 3.1632 | | | 2.707 |
| Image Plane | ∞ | -0.0013 | | | 2.431 |
| Area Data "*" indicates aspherical surface | | | | | |

[Table 17]

|    | K | A4 | A6 | A8 | A10 | A12 | A14 | A16 |
|----|---|----|----|----|-----|-----|-----|-----|
| 3  | 0.00000E+00 | -3.51310E-03 | 1.40254E-04 | -8.16567E-05 | 1.48820E-05 | -1.34375E-06 | 5.95448E-08 | -9.87615E-10 |
| 4  | 0.00000E+00 | -3.12216E-02 | -1.54862E-03 | -3.06435E-03 | 1.15615E-03 | -3.42175E-04 | 0.00000E+00 | 0.00000E+00 |
| 14 | 0.00000E+00 | -7.46452E-04 | -1.76180E-04 | 5.32381E-05 | -5.61781E-06 | 1.64091E-07 | 0.00000E+00 | 0.00000E+00 |
| 15 | 0.00000E+00 | -3.41474E-03 | 1.14345E-04 | 9.14214E-06 | -8.94269E-07 | -3.50E-08 | 0.00E+00 | 0.00E+00 |

Aspherical Data

<Example 9>

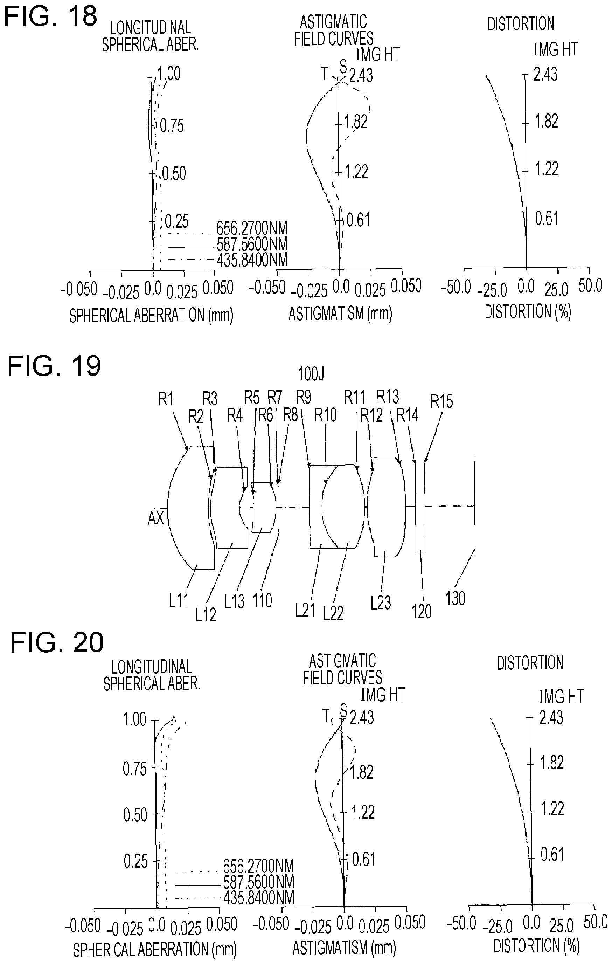

Fig. 17 illustrates the basic configuration of the image-capturing optical system 100I in the ninth embodiment. The area data and the aspherical data of the image-capturing optical system of Example 9 are illustrated in Table 18 and Table 19, respectively. Fig. 18 is an aberration diagram illustrating spherical aberration, astigmatism and distortion.

As illustrated in Fig. 17, in the image-capturing optical system 100E, the first lens L11 of the first lens group L1 having a positive refractive power, the second lens L12 of the first lens group L1 having a negative refractive power, the third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L12 having the negative refractive power is a convex surface in a paraxial region and has an aspherical surface having a shape with which convex power decreases with increasing distance from an optical axis. The amount of sag of the object-side surface of the lens L12 and the amount of sag of the image-side surface of the lens L12 both have no extrema within the effective diameter. The object-side surface of the lens L13 has a predetermined aspherical shape, and the amount of sag of the object-side surface of the lens L13 is set in such a manner that the object-side surface has a concave surface shape toward the object side in a paraxial region and a convex surface shape in a peripheral region.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 18 illustrates the diaphragm, the curvature radius r (mm), the distance d (mm), the refractive index N (d), the Abbe number νd, and the effective diameter of each of the lenses corresponding to the surface numbers of the image-capturing optical system 100E in Example 9. In Table 18, the symbol "*" is given to some of the surface numbers, and this indicates that the corresponding surface has a shape. As illustrated in Table 18, the two surfaces of the lens L12, the two surfaces of the lens L24, and the object-side surface of the lens L13 are aspherical surfaces. Table 19 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 17, and the distance d in the column of the surface number 2 indicates the distance between the surface R2 and the surface R3 in Fig. 17.

Numerical Example 9

[Table 18]

| Surface Number | r | d | N(d) | νd | Effective Diameter |
|---|---|---|---|---|---|
| 1 | 6.9233 | 3.2000 | 1.51633 | 64.142 | 4.904 |
| 2 | 12.8684 | 0.9441 | | | 3.733 |
| 3* | 6.4382 | 2.6108 | 1.7645 | 49.0969 | 2.961 |
| 4* | 1.8333 | 1.0000 | | | 1.560 |
| 5* | -19.2042 | 1.5494 | 1.6727 | 32.0992 | 1.513 |
| 6 | -5.3645 | 0.1671 | | | 1.488 |

(continued)

| Surface Number | r | d | N(d) | νd | Effective Diameter |
|---|---|---|---|---|---|
| 7(Diaphragm) | ∞ | 0.7807 | | | 1.400 |
| 8 | ∞ | 0.7307 | | | 1.446 |
| 9 | -25.0730 | 1.6679 | 1.43875 | 94.6611 | 1.500 |
| 10 | -4.2446 | 0.1671 | | | 1.982 |
| 11 | -135.8401 | 0.8503 | 1.84666 | 23.7779 | 2.199 |
| 12 | 6.6730 | 2.2557 | 1.6779 | 55.3412 | 2.444 |
| 13 | -10.0130 | 0.1671 | | | 2.795 |
| 14* | 7.5914 | 2.1390 | 1.58913 | 61.1526 | 3.034 |
| 15* | -132.8597 | 0.7093 | | | 3.141 |
| 16 | ∞ | 0.7000 | 1.51633 | 64.142 | 2.988 |
| 17 | ∞ | 3.3116 | | | 2.920 |
| Image Plane | ∞ | 0.0000 | | | 2.433 |
| Area Data "*" indicates aspherical surface | | | | | |

[Table 19]

| | K | A4 | A6 | A8 | A10 | A12 | A14 | A16 |
|---|---|---|---|---|---|---|---|---|
| 3 | 0.00000E+00 | -3.90860E-03 | 1.17050E-04 | -6.00100E-05 | 1.05150E-05 | -8.80640E-07 | 3.44550E-08 | -4.50550E-10 |
| 4 | 0.00000E+00 | -2.44180E-02 | 1.69650E-03 | -4.70760E-03 | 1.70450E-03 | -3.42180E-04 | 0.00000E+00 | 0.00000E+00 |
| 5 | 0.00000E+00 | -1.22200E-03 | 2.74800E-03 | -1.45220E-03 | 3.54130E-04 | 4.02120E-15 | 0.00000E+00 | 0.00000E+00 |
| 14 | 0.00000E+00 | -6.99500E-04 | -9.80750E-05 | 5.28230E-06 | -1.80250E-07 | -4.90300E-08 | 0.00000E+00 | 0.00000E+00 |
| 15 | 0.00000E+00 | -2.61010E-03 | -4.76630E-05 | 1.18440E-05 | -1.41520E-06 | 3.06460E-08 | 0.00000E+00 | 0.00000E+00 |

Aspherical Data

<Example 10>

Fig. 19 illustrates the basic configuration of the image-capturing optical system 100J in the tenth embodiment. The area data and the aspherical data of the image-capturing optical system of Example 10 are illustrated in Table 20 and Table 21, respectively. Fig. 20 is an aberration diagram illustrating spherical aberration, astigmatism and distortion.

As illustrated in Fig. 19, in the image-capturing optical system 100E, the first lens L11 of the first lens group L1 having a positive refractive power, the second lens L12 of the first lens group L1 having a negative refractive power, the third lens L13 of the first lens group L1 having a positive refractive power, the on-axis luminous flux regulating diaphragm 110, the first lens L21 of the second lens group L2, the second lens L22 of the second lens group L2, the third lens L23 of the second lens group L2, the flat plate 120, and the imaging plane 130 are arranged in this order starting from the object side.

The first lens group L1 has a negative refractive power. The second lens group L2 has a positive refractive power. The object-side surface of the lens L12 having the negative refractive power is a convex surface in a paraxial region and has an aspherical surface having a shape with which convex power decreases with increasing distance from an optical axis. The amount of sag of the object-side surface of the lens L12 and the amount of sag of the image-side surface of the lens L12 both have no extrema within the effective diameter, and the amount of sag of the object-side surface of the lens L13 and the amount of sag of the image-side surface of the lens L13 both have no extrema within the effective diameter.

The second lens group L2 includes the lens L21 having a negative refractive power, the lens L22 having a positive refractive power, and the lens L23 having a positive refractive power that are arranged in this order starting from the object side. The lens L21 and the lens L22 forms a doublet lens. The lens L23 has a predetermined aspherical shape. The surface of the lens L23 on the most image side has a convex shape toward the image side in a paraxial region. The amount of sag of the object-side surface of the lens L23 and the amount of sag of the image-side surface of the lens L23 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 20 illustrates the diaphragm, the curvature radius r (mm), the distance d (mm), the refractive index N (d), the Abbe number νd, and the effective diameter of each of the lenses corresponding to the surface numbers of the image-capturing optical system 100E in Example 10. In Table 20, the symbol "*" is given to some of the surface numbers, and this indicates that the corresponding surface has an aspherical shape. As illustrated in Table 20, the two surfaces of the lens L12, the two surfaces of the lens L13, and the two surfaces of the lens L23 are aspherical surfaces. Table 21 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 19, and the distance d in the column of the surface number 2 indicates the distance between the surface R2 and the surface R3 in Fig. 19.

Numerical Example 10

[Table 20]

| Surface Number | r | d | N(d) | νd | Effective Diameter |
|---|---|---|---|---|---|
| 1 | 6.4226 | 2.9394 | 1.51633 | 64.142 | 4.001 |
| 2 | 9.8809 | 0.1500 | | | 2.787 |
| 3* | 5.3920 | 2.0569 | 1.7645 | 49.0969 | 2.660 |
| 4* | 1.8188 | 0.9986 | | | 1.560 |
| 5* | -29.0377 | 1.6188 | 1.6727 | 32.0992 | 1.546 |
| 6* | -4.5557 | 0.1671 | | | 1.643 |
| 7(Diaphragm) | 1.00E+18 | 1.6949 | | | 1.500 |

(continued)

| Surface Number | r | d | N(d) | νd | Effective Diameter |
|---|---|---|---|---|---|
| 8 | 1.00E+18 | 0.5672 | | | 1.550 |
| 9 | 448.0836 | 0.8496 | 1.84666 | 23.7779 | 1.759 |
| 10 | 4.3717 | 3.0676 | 1.6779 | 55.3412 | 2.066 |
| 11 | -6.5614 | 0.1671 | | | 2.700 |
| 12* | 6.7731 | 2.7312 | 1.58913 | 61.1526 | 3.000 |
| 13* | -116.9109 | 0.7093 | | | 3.209 |
| 14 | ∞ | 0.7000 | 1.51633 | 64.142 | 3.034 |
| 15 | ∞ | 3.5547 | | | 2.965 |
| Image Plane | ∞ | 0 | | | 2.432196 |

Area Data "*" indicates aspherical surface

[Table 21]

|  | K | A4 | A6 | A8 | A10 | A12 | A14 | A16 |
|---|---|---|---|---|---|---|---|---|
| 3 | 0.00000E+00 | -6.08510E-03 | 1.57780E-04 | -1.19200E-04 | 2.76040E-05 | -2.67300E-06 | 1.16440E-07 | -1.82590E-09 |
| 4 | 0.00000E+00 | -2.94770E-02 | 7.33360E-04 | -4.84900E-03 | 1.80390E-03 | -3.42180E-04 | 0.00000E+00 | 0.00000E+00 |
| 5 | 0.00000E+00 | -6.91380E-03 | -3.61570E-04 | -9.73810E-04 | 1.60320E-04 | 3.08970E-05 | 0.00000E+00 | 0.00000E+00 |
| 6 | 0.00000E+00 | -5.38990E-03 | -6.06360E-04 | -1.48250E-04 | 2.73860E-05 | 0.00000E+00 | 0.00000E+00 | 0.00000E+00 |
| 12 | 0.00000E+00 | -1.63440E-03 | -5.28170E-05 | -2.11870E-06 | 3.24940E-07 | -5.12770E-08 | 0.00000E+00 | 0.00000E+00 |
| 13 | 0.00000E+00 | -4.03750E-03 | 3.83650E-05 | 1.34860E-06 | -3.84230E-07 | 3.53500E-09 | 0.00000E+00 | 0.00000E+00 |

Aspherical Data

<Example 11>

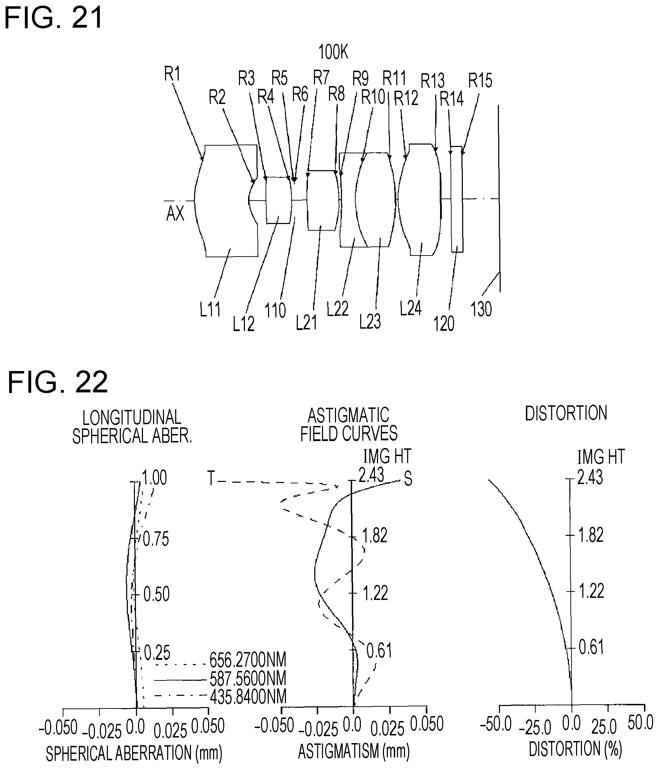

Fig. 21 illustrates the basic configuration of the image-capturing optical system 100K in the eleventh embodiment. The area data and the aspherical data of the image-capturing optical system of Example 11 are illustrated in Table 22 and Table 23, respectively. Fig. 22 is an aberration diagram illustrating spherical aberration, astigmatism and distortion.

As illustrated in Fig. 21, in the image-capturing optical system 100A, the first lens L11 of the first lens group L1 having a negative refractive power, the second lens L12 of the first lens group L1 having a positive refractive power, the on-axis luminous flux regulating diaphragm 110, the first lens L21 of the second lens group L2, the second lens L22 of the second lens group L2, the third lens L23 of the second lens group L2, the fourth lens L24 of the second lens group L2, the flat plate 120, and the imaging plane 130 are arranged in this order starting from the object side.

The first lens group L1 has a negative refractive power. The second lens group L2 has a positive refractive power. The object-side surface of the lens L11 having the negative refractive power is a convex surface in a paraxial region and has an aspherical surface having a shape with which convex power decreases with increasing distance from an optical axis. The amount of sag of the object-side surface of the lens L11 and the amount of sag of the image-side surface of the lens L11 both have no extrema within the effective diameter.

The second lens group L2 includes the lens L21 having a positive refractive power, the lens L22 having a negative refractive power, the lens L23 having a positive refractive power, and the lens L24 having a positive refractive power that are arranged in this order starting from the object side. The lens L22 and the lens L23 forms a doublet lens. The lens L24 has a predetermined aspherical shape. The surface of the lens L24 on the most image side has a convex shape toward the image side in a paraxial region. The amount of sag of the object-side surface of the lens L24 and the amount of sag of the image-side surface of the lens L24 both have no extrema within the effective diameter.

In a configuration diagram of an optical system, the flat plate 120 that is disposed closest to the imaging plane 130 is a filter. The filter is an optical filter such as an IR cut filter or a low-pass filter and its characteristics are suitably selected in accordance with an image-capturing device to which the imaging optical system according to the present embodiment is applied.

Table 22 illustrates the diaphragm, the curvature radius r (mm), the distance d (mm), the refractive index N (d), the Abbe number vd, and the effective diameter of each of the lenses corresponding to the surface numbers of the image-capturing optical system 100A in Example 11. In Table 22, the symbol "*" is given to some of the surface numbers, and this indicates that the corresponding surface has an aspherical shape. As illustrated in Table 22, the two surfaces of the lens L11 and the two surfaces of the lens L24 are aspherical surfaces. Table 23 illustrates the aspheric coefficients of some of the surfaces. In the case of an aspherical surface, the curvature radius r indicates the paraxial radius of curvature. The distance d indicates the distance between the surface with the corresponding surface number and the surface with the next surface number. Thus, the distance d in the column of the surface number 1 indicates the distance between the surface R1 and the surface R2 in Fig. 21, and the distance d in the column of the surface number 2 indicates the distance between the surface R2 and the surface R3 in Fig. 21.

Numerical Example 11

[Table 22]

| Surface Number | r | d | N(d) | vd | Effective Diameter |
|---|---|---|---|---|---|
| 1* | 4.5759 | 3.3500 | 1.7645 | 49.0969 | 3.016 |
| 2* | 1.7377 | 1.0078 | | | 1.400 |
| 3 | 23.5321 | 1.6020 | 1.6727 | 32.0992 | 1.249 |
| 4 | -6.1218 | 0.1500 | | | 1.039 |
| 5(Diaphragm) | ∞ | 0.4992 | | | 0.960 |
| 6 | ∞ | 0.2838 | | | 1.032 |
| 7 | 19.7176 | 1.9670 | 1.43875 | 94.6611 | 1.157 |
| 8 | -6.0728 | 0.1499 | | | 1.616 |
| 9 | -18.4939 | 0.8498 | 1.84666 | 23.7779 | 1.720 |

(continued)

| Surface Number | r | d | N(d) | νd | Effective Diameter |
|---|---|---|---|---|---|
| 10 | 5.8791 | 2.4440 | 1.6779 | 55.3412 | 2.020 |
| 11 | -8.8546 | 0.1500 | | | 2.542 |
| 12* | 5.4686 | 2.6190 | 1.58913 | 61.1526 | 2.921 |
| 13* | -278.9566 | 0.6364 | | | 3.000 |
| 14 | ∞ | 0.7000 | 1.51633 | 64.142 | 2.844 |
| 15 | ∞ | 2.2636 | | | 2.773 |
| Image Plane | ∞ | 0.0000 | | | 2.445 |

Area Data "*" indicates aspherical surface

[Table 23]

|    | K | A4 | A6 | A8 | A10 | A12 | A14 | A16 |
|----|---|-----|-----|-----|------|------|------|------|
| 1 | 0.00000E+00 | -4.24060E-03 | 3.38120E-04 | -2.10300E-04 | 4.23670E-05 | -4.75120E-06 | 2.70010E-07 | -5.92690E-09 |
| 2 | 0.00000E+00 | -4.03760E-02 | 7.60480E-03 | -1.29420E-02 | 5.48620E-03 | -1.12790E-03 | 0.00000E+00 | 0.00000E+00 |
| 12 | 0.00000E+00 | -2.09700E-03 | 2.41850E-04 | -3.72920E-05 | 3.16260E-06 | -2.14520E-07 | 0.00000E+00 | 0.00000E+00 |
| 13 | 0.00000E+00 | -8.32950E-03 | 1.08540E-03 | -1.04860E-04 | 5.08050E-06 | -1.51490E-07 | 0.00000E+00 | 0.00000E+00 |

Aspherical Data

Although the image-capturing lens according to the present embodiment has been described above, the present disclosure is not limited to the image-capturing lenses of the above Examples, and various modifications can be made within the gist of the disclosure. For example, the specifications of the image-capturing lenses 100 of Examples 1 to 11 are examples, and various parameters can be changed within the gist of the present disclosure.

According to the present embodiment, a wide-angle image-capturing lens such as a surveillance camera or a vehicle-mounted camera that can be installed in various places, that has a favorable imaging performance over the entire screen while ensuring a wide field of view, and that has a high optical performance can be provided.

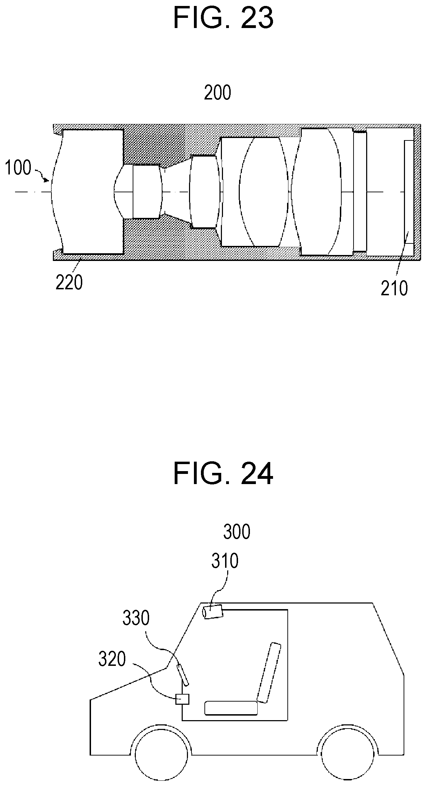

Fig. 23 is a sectional view illustrating an embodiment of an image-capturing device 200 that uses the image-capturing lens 100 according to an embodiment of the present disclosure. The image-capturing lens 100 and an image-capturing device 210, such as a CCD or a CMOS, are defined and held in position relative to each other by a housing 220. In this case, the imaging plane 130 of the image-capturing lens 100 is disposed so as to coincide with a light receiving surface of the image-capturing device 210.

A subject image that is captured by the image-capturing lens 100 and focused on the light receiving surface of the image-capturing device 210 is converted into an electrical signal by a photoelectric conversion function of the image-capturing device 210 and output as an image signal from the image-capturing device 200.

Fig. 24 is a diagram illustrating an example of a configuration in which the image-capturing device 200 that uses the image-capturing lens 100 according to an embodiment of the present disclosure is mounted as a vehicle-mounted camera 310 on a vehicle 300 according to an embodiment of the present disclosure. The vehicle 300 includes the vehicle-mounted camera 310 and an image processing apparatus 320. Although the vehicle-mounted camera 310 is mounted inside or outside a vehicle cabin of the vehicle 300 and is capable of capturing an image in a predetermined direction, in the case illustrated in Fig. 24, the vehicle-mounted camera 310 is fixed to the front of the vehicle cabin and captures a peripheral image of the front view of the vehicle 300.

The vehicle-mounted camera 310 outputs a captured image to the image processing apparatus 320 via a communication unit in the vehicle 300. The image processing apparatus 320 includes a memory that stores a dedicated processor for image processing, such as an image processing application specific integrated circuit (ASIC) or digital signal processing (DSP), and various information items and performs processing such as white balance adjustment, exposure adjustment processing, color interpolation, brightness correction, or gamma correction on images that are output by the vehicle-mounted camera 310 and other vehicle-mounted cameras. The image processing apparatus 320 performs processing such as switching of images, combination of images captured by a plurality of vehicle-mounted cameras, clipping of some images, or superimposing of a symbol, a character, a line that represents forecast trajectory, or the like onto an image and outputs an image signal according to the specifications of a display device 330. The vehicle-mounted camera 310 may have some or all of the functions of the image processing apparatus 320.

The display device 330 is disposed in or on a dashboard or the like of the vehicle 300 and displays image information processed by the image processing apparatus 320 to a driver of the vehicle 300.

As described above, the image-capturing lens 100 enables, at low cost, obtaining an image with a high definition and favorable viewability in a central region of a screen while ensuring a wide angle of view. As a result, the image-capturing lens 100 is suitable for various image-capturing devices and surveillance cameras and vehicle cameras that use such image-capturing devices.

Reference Signs List

| | |
|---|---|
| 100, 100A to 100K | image-capturing optical system |
| L1 | first lens group |
| L2 | second lens group |
| L11 | first lens of first lens group L1 |
| L12 | second lens of first lens group L1 |
| L13 | third lens of first lens group L1 |
| L21 | first lens of second lens group L2 |
| L22 | second lens of second lens group L2 |
| L23 | third lens of second lens group L2 |
| L23 | fourth lens of second lens group L2 |
| 110 | on-axis luminous flux regulating diaphragm |
| 120 | flat plate |
| 130 | imaging plane |

| 210 | image-capturing device |
|-----|------------------------|
| 220 | housing |
| 200 | image-capturing device |
| 300 | vehicle |
| 310 | vehicle-mounted camera |
| 320 | image processing apparatus |
| 330 | display device |

**Claims**

1. An image-capturing optical system comprising:

   a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole;
   at least one on-axis luminous flux regulating diaphragm; and
   a second lens group that has a positive refractive power,
   wherein a surface of at least one of the lens that are included in the first lens group and that have the negative refractive power, the surface being located on the object side, is a convex surface in a paraxial region and has an aspherical surface having a shape with which convex power decreases with increasing distance from an optical axis,
   wherein a surface of the second lens group on the most image side has a convex shape toward the image side in a paraxial region, and
   wherein the image-capturing optical system satisfies conditional expressions (1) to (3) described below.

   $$-1.30 < fn/f < -0.6 \quad \ldots \quad (1)$$

   $$Di/\tan\omega/100 < -0.4 \quad \ldots \quad (2)$$

   $$2\omega \leq 120° \quad \ldots \quad (3)$$

   where:

   f: a focal length of an entire lens system
   fn: a focal length of a negative lens of the first lens group
   Di: a distortion at a maximum angle of view (unit: %)
   ω: an incident angle of a maximum angle of view light beam on the object side

2. The image-capturing optical system according to Claim 1,
   wherein the image-capturing optical system satisfies conditional expression (4) described below.

   $$0.8 < fpf/fb < 2.2 \quad \ldots \quad (4)$$

   where:

   fpf: a focal length of a positive refractive power lens on the most image side in the first lens group
   fb: a composite focal length of the positive refractive power lens on the most image side in the first lens group and the second lens group

3. The image-capturing optical system according to Claim 1 or 2,
   wherein all aspherical surfaces have no extrema within an effective diameter of a light beam.

4. An image-capturing device comprising:

an image-capturing optical system that includes a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power, in which a surface of at least one of the lens that are included in the first lens group and that have the negative refractive power, the surface being located on the object side, is a convex surface in a paraxial region and has an aspherical surface having a shape with which convex power decreases with increasing distance from an optical axis and in which a surface of the second lens group on the most image side has a convex shape toward the image side in a paraxial region, the image-capturing optical system satisfying conditional expressions (1) to (3) described below; and an image-capturing device that converts an optical image, which is formed through the image-capturing optical system, into an electrical signal.

$$-1.30 < fn/f < -0.6 \ ... \ (1)$$

$$Di/\tan\omega/100 < -0.4 \ ... \ (2)$$

$$2\omega \leq 120° \ ... \ (3)$$

where:

f: a focal length of an entire lens system
fn: a focal length of a negative lens of the first lens group
Di: a distortion at a maximum angle of view (unit: %)
$\omega$: an incident angle of a maximum angle of view light beam on the object side

5. A vehicle that is equipped with an image-capturing device, the image-capturing device comprising:

an image-capturing optical system that includes a first lens group that includes a first lens having a positive refractive power, a second lens having a negative refractive power, and a third lens having a positive refractive power arranged in this order starting from an object side or that includes a first lens having a negative refractive power and a second lens having a positive refractive power arranged in this order starting from the object side, the first lens group having a negative refractive power as a whole, at least one on-axis luminous flux regulating diaphragm, and a second lens group that has a positive refractive power, in which a surface of at least one of the lens that are included in the first lens group and that have the negative refractive power, the surface being located on the object side, is a convex surface in a paraxial region and has an aspherical surface having a shape with which convex power decreases with increasing distance from an optical axis and in which a surface of the second lens group on the most image side has a convex shape toward the image side in a paraxial region, the image-capturing optical system satisfying conditional expressions (1) to (3) described below; and an image-capturing device that converts an optical image, which is formed through the image-capturing optical system, into an electrical signal.

$$-1.30 < fn/f < -0.6 \ ... \ (1)$$

$$Di/\tan\omega/100 < -0.4 \ ... \ (2)$$

$$2\omega \leq 120° \ ... \ (3)$$

where:

f: a focal length of an entire lens system
fn: a focal length of a negative lens of the first lens group
Di: a distortion at a maximum angle of view (unit: %)
ω: an incident angle of a maximum angle of view light beam on the object side

# FIG. 1

# FIG. 2

LONGITUDINAL SPHERICAL ABER.

ASTIGMATIC FIELD CURVES

DISTORTION

# FIG. 3

# FIG. 4

LONGITUDINAL
SPHERICAL ABER.

ASTIGMATIC
FIELD CURVES

DISTORTION

IMG HT

IMG HT

1.00

0.75

0.50

0.25

..... 656.2700NM
——— 587.5600NM
— · — 435.8400NM

-0.050 -0.025 0.0 0.025 0.050
SPHERICAL ABERRATION (mm)

S 2.43 — — T

1.82

1.22

0.61

-0.050 -0.025 0.0 0.025 0.050
ASTIGMATISM (mm)

2.43

1.82

1.22

0.61

-50.0 -25.0 0.0 25.0 50.0
DISTORTION (%)

# FIG. 5

100C

R1  R2  R3 R4 R5 R6  R7 R8  R9 R10 R11 R12  R13 R14  R15

AX

L11  L12  110  L21  L22  L23  L24  120  130

## FIG. 6

LONGITUDINAL
SPHERICAL ABER.

ASTIGMATIC
FIELD CURVES

DISTORTION

.......... 656.2700NM
——— 587.5600NM
——·—· 435.8400NM

SPHERICAL ABERRATION (mm)

ASTIGMATISM (mm)

DISTORTION (%)

## FIG. 7

FIG. 8

LONGITUDINAL SPHERICAL ABER.

656.2700NM
587.5600NM
435.8400NM

-0.050  -0.025  0.0  0.025  0.050
SPHERICAL ABERRATION (mm)

ASTIGMATIC FIELD CURVES
IMG HT

-0.050  -0.025  0.0  0.025  0.050
ASTIGMATISM (mm)

DISTORTION
IMG HT

-50.0  -25.0  0.0  25.0  50.0
DISTORTION (%)

FIG. 9

100E

R1 R2 R3 R4 R5 R6 R7 R8 R9 R10 R11 R12 R13 R14 R15 R16 R17

AX

L11 L12 L13 110 L21 L22 L23 L24 120 130

FIG. 10

LONGITUDINAL SPHERICAL ABER.

656.2700NM
587.5600NM
435.8400NM

-0.050  -0.025  0.0  0.025  0.050
SPHERICAL ABERRATION (mm)

ASTIGMATIC FIELD CURVES
IMG HT

S  2.43  T

-0.050  -0.025  0.0  0.025  0.050
ASTIGMATISM (mm)

DISTORTION
IMG HT

-50.0  -25.0  0.0  25.0  50.0
DISTORTION (%)

FIG. 11

100F

R1 R2 R3 R4 R5 R6 R7 R8 R9 R10 R11 R12 R13 R14 R15

AX

L11 L12 110 L21 L22 L23 L24 120 130

FIG. 12

LONGITUDINAL
SPHERICAL ABER.

1.00

0.75

0.50

0.25

656.2700NM
587.5600NM
435.8400NM

-0.050  -0.025  0.0  0.025  0.050
SPHERICAL ABERRATION (mm)

ASTIGMATIC
FIELD CURVES

T    S    ANGLE (deg)
36.85

27.63

18.42

9.21

-0.050  -0.025  0.0  0.025  0.050
ASTIGMATISM (mm)

DISTORTION

ANGLE (deg)
36.85

27.63

18.42

9.21

-50.0  -25.0  0.0  25.0  50.0
DISTORTION (%)

FIG. 13

100G

R1 R2 R3 R4 R5 R6 R7 R8 R9 R10 R11 R12 R13 R14 R15

AX

L11 L12 110 L21 L22 L23 L24 120 130

# FIG. 14

LONGITUDINAL
SPHERICAL ABER.

ASTIGMATIC
FIELD CURVES

DISTORTION

656.2700NM
587.5600NM
435.8400NM

SPHERICAL ABERRATION (mm)

ASTIGMATISM (mm)

DISTORTION (%)

# FIG. 15

100H

## FIG. 16

| LONGITUDINAL SPHERICAL ABER. | ASTIGMATIC FIELD CURVES | DISTORTION |
|---|---|---|

LONGITUDINAL
SPHERICAL ABER.

1.00
0.75
0.50
0.25

- - - - - 656.2700NM
――――― 587.5600NM
- · - · - 435.8400NM

-0.050 -0.025 0.0 0.025 0.050
SPHERICAL ABERRATION (mm)

ASTIGMATIC
FIELD CURVES

T   S   IMG HT
2.43
1.82
1.22
0.61

-0.050 -0.025 0.0 0.025 0.050
ASTIGMATISM (mm)

DISTORTION

IMG HT
2.43
1.82
1.22
0.61

-50.0 -25.0 0.0 25.0 50.0
DISTORTION (%)

## FIG. 17

100I

R1 R2 R3 R4 R5 R6 R7 R8 R9 R10 R11 R12 R13 R14 R15 R16 R17

AX

L11 L12 L13 110 L21 L22 L23 L24 120 130

FIG. 18

LONGITUDINAL
SPHERICAL ABER.

1.00

0.75

0.50

0.25
656.2700NM
587.5600NM
435.8400NM

-0.050 -0.025 0.0 0.025 0.050
SPHERICAL ABERRATION (mm)

ASTIGMATIC
FIELD CURVES
IMG HT

T S 2.43

1.82

1.22

0.61

-0.050 -0.025 0.0 0.025 0.050
ASTIGMATISM (mm)

DISTORTION
IMG HT

2.43

1.82

1.22

0.61

-50.0 -25.0 0.0 25.0 50.0
DISTORTION (%)

FIG. 19

100J

R1 R3 R5 R7 R9 R11 R13 R15
R2 R4 R6 R8 R10 R12 R14

AX

L11 L13 110 L21 L23 120 130
L12 L22

FIG. 20

LONGITUDINAL
SPHERICAL ABER.

1.00

0.75

0.50

0.25
656.2700NM
587.5600NM
435.8400NM

-0.050 -0.025 0.0 0.025 0.050
SPHERICAL ABERRATION (mm)

ASTIGMATIC
FIELD CURVES
IMG HT

T S 2.43

1.82

1.22

0.61

-0.050 -0.025 0.0 0.025 0.050
ASTIGMATISM (mm)

DISTORTION
IMG HT

2.43

1.82

1.22

0.61

-50.0 -25.0 0.0 25.0 50.0
DISTORTION (%)

## FIG. 21

100K

R1 R3 R5 R7 R9 R11 R13 R15
R2 R4 R6 R8 R10 R12 R14

AX

L11 L12 110 L21 L22 L23 L24 120 130

## FIG. 22

LONGITUDINAL
SPHERICAL ABER.

ASTIGMATIC
FIELD CURVES

DISTORTION

IMG HT

IMG HT

T 2.43 S 2.43

1.82 1.82

0.75

1.22 1.22

0.50

0.61 0.61

0.25 656.2700NM
587.5600NM
435.8400NM

-0.050 -0.025 0.0 0.025 0.050
SPHERICAL ABERRATION (mm)

-0.050 -0.025 0.0 0.025 0.050
ASTIGMATISM (mm)

-50.0 -25.0 0.0 25.0 50.0
DISTORTION (%)

# FIG. 23

200

100

220

210

# FIG. 24

300

310

330

320

## INTERNATIONAL SEARCH REPORT

| | International application No. |
|---|---|
| | PCT/JP2021/008473 |

**A. CLASSIFICATION OF SUBJECT MATTER**
G02B 13/04(2006.01)i
FI: G02B13/04 C; G02B13/04 D

According to International Patent Classification (IPC) or to both national classification and IPC

**B. FIELDS SEARCHED**

Minimum documentation searched (classification system followed by classification symbols)
G02B13/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-242739 A (CANON INC.) 10 December 2012 (2012-12-10) paragraphs [0001]–[0009], numerical example 2, fig. 3-4 | 1-5 |
| X | JP 8-334688 A (FUJI PHOTO OPTICAL CO., LTD.) 17 December 1996 (1996-12-17) examples 1, 3, fig. 1-2, 7-8 | 1, 3-5 |
| A | examples 1, 3, fig. 1-2, 7-8 | 2 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 May 2021 (06.05.2021) | 18 May 2021 (18.05.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/008473

| Patent Documents referred in the Report | Publication Date | Patent Family | Publication Date |
|---|---|---|---|
| JP 2012-242739 A | 10 Dec. 2012 | US 2012/0300113 A1 paragraphs [0002]-[0010], example 2, fig. 3-4 CN 102798966 A CN 104536121 A | |
| JP 8-334688 A | 17 Dec. 1996 | US 5703724 A examples 1, 3, fig. 1-2, 7-8 | |

Form PCT/ISA/210 (patent family annex) (January 2015)

57

**EP 4 130 837 A1**

**Patent documents cited in the description**

- JP 2020053082 A

- JP 2005010521 A